# EUROPEAN PATENT SPECIFICATION

(11) **EP 3 165 848 B1**
(45) Date of publication and mention of the grant of the patent: **20.06.2018**
(21) Application number: 16460076.9
(22) Date of filing: 14.10.2016
(51) Int. Cl.: F24T 10/15

(54) **ARRANGEMENT FOR OBTAINING HEAT FROM GROUNDWATER FOR AIR-CONDITION AND VENTILATION PURPOSES**
ANORDNUNG ZUR WÄRMEGEWINNUNG AUS GRUNDWASSER FÜR KLIMATISIERUNGS- UND BELÜFTUNGSZWECKE
DISPOSITIF D'OBTENTION DE CHALEUR A PARTIR D'EAU SOUTERRAINE POUR CONDITIONEMENT D'AIR ET AÉRATION

(30) Priority: 09.11.2015 PL 41473015
(43) Date of publication of application: 10.05.2017
(73) Proprietor: Struzik, Wojciech, 21-003 Ciecierzyn (PL)
(72) Inventor: Struzik, Wojciech, 21-003 Ciecierzyn (PL)

(56) References cited:
- WO-A1-81/03061
- JP-A- 2006 234 340
- PL-A1- 406 309
- US-A1- 2008 289 795
- US-A1- 2009 084 518

## Description

The subject-matter of the invention is an arrangement for obtaining heat from groundwater for air-condition and ventilation purposes. The arrangement uses internal heat of the earth for heating air supplied to a building.

Commonly used ventilation and air conditioning systems generate energy consumption. Electric generators, in most cases, are driven by energy obtained from the combustion of fuels which causes emission of large amounts of carbon dioxide to the atmosphere and in consequence the greenhouse effect. Below the aeration zone of the ground there is no direct influence of the atmospheric factors, and therefore the temperature is substantially constant, independent of the time of year and it is at an average of 7 to 12 °C. The heat carrier in this zone is groundwater.
There are known systems which use internal heat of the earth for heating, cooling or air-condition of rooms in buildings. The operation of such systems is described in the specification of the German patent DE19606727. The known system comprises a closed water tank situated in the ground at appropriate depth and a liquid-air heat exchanger situated in a building. These units are connected by an installation of supply pipes and return pipes, which work in a closed circuit. The flow is forced by a circulator which is built-up on a supply pipe. The operation of the heat exchanger is supported by a supply fan. The heat exchanging based on transferring the heat of groundwater through the walls of the tank to the circulation system does not satisfy the demand for the temperature sufficient for cooling, heating or air-conditioning of a building. The European Patent specification EP0041658 describes a closed circuit of heat carrier. Besides a water tank that directly retrieves the heat of the earth, the closed circuit has a heat-insulated tank which accumulates the heat. That heat-insulated tank is situated in a building or in its basement. Heat exchangers and supply fans and typical hydraulic equipment: cut-off valves, circulation pump, control valves are mounted on installation of supply pipes and return pipes.

Another system for obtaining heat from groundwater for air-condition and ventilation purposes is also disclosed in PL406309 A1.

The aim of the solution according to the invention is to increase the efficient use of thermal energy of groundwater destined for heating external air in air-condition and ventilation arrangements and to reduce electricity consumption.
Arrangement for obtaining heat from groundwater for air- condition and ventilation purposes according to the invention is provided with an installation of supply pipes and return pipes situated in wellbores. On the supply installation perforated heads are mounted. The perforated heads have transverse pipes situated inside their supply pipes. The transverse pipes are mounted in alternate manner and their axes make an angle of 45°, which gives swirling flow of water and increases the surface of heat exchange via the perforation.
The transverse pipes, through which groundwater flows, are made of acid steel having increased heat- transfer coefficient and increased cooling-transfer coefficient.
The arrangement is provided with a unit of countercurrent ground-heat exchangers connected in series in a system of cascade and immersed in groundwater in wellbores. Additionally, the ground-heat exchangers are connected to a first degree heater situated in an air-conditioning unit by means of the installation of supply pipes and return pipes, working in a closed circuit. On the supply pipes which supply the heater with warm water, there are installed in sequence in the flow: a cut-off valve, a strainer, a cut-off valve and a three-way control valve. On the return pipes which drain cold water out of the heater, there are installed in sequence: a balance valve, a circulation pump, a check valve and a cut-off valve.
It is preferred, that the heat carrier in the arrangement is 30% to 40% water solution of glycol and the level of ground water is minimum 10 m below the area level. Charging the arrangement with water solution of glycol protects the arrangement from freezing in winter, when the temperatures of air sucked to an intake ventilator are in the range of - 20°C.
The heat obtained in the ground-heat exchangers of the arrangement according to the invention allows to economize 40% on energy consumption in comparison with current demand of ventilation unit and air-conditioning facility.

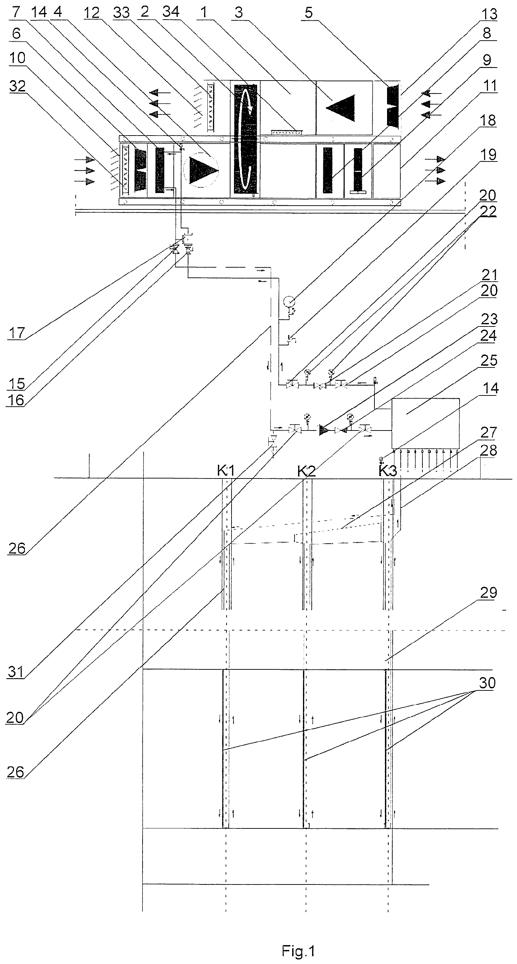

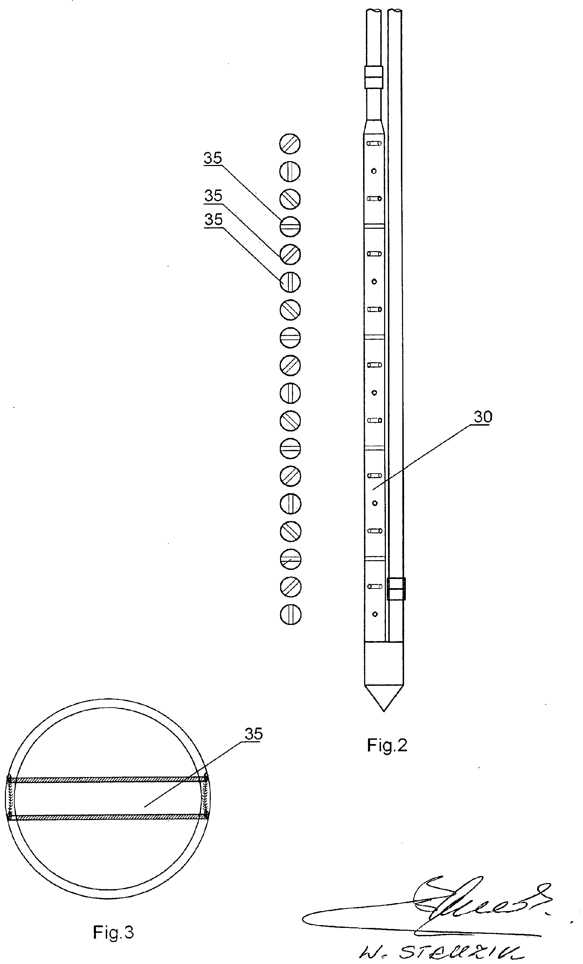

An example of realization the invention is presented on the accompanying drawings, where: Figure 1 is the scheme of the arrangement, Figure 2 is a vertical section of a repeatable fragment of the pipeline of the perforated head, Figure 3 is a horizontal section of the pipeline of the perforated head through the transverse pipes mounted inside.

An air conditioning unit 1 has a rotary heat exchanger 2, an uptake ventilator 3, an intake ventilator 4, an uptake filter 5, an intake filter 6, a first degree heater 7, a second degree heater 8, a cooling condenser 9, a fresh air intake ventilator 10, an aerator 11, an exhaust terminal 12, a ventilating hood 13, an air-escape 14, an intake ventilator throttle 32, an exhaust terminal throttle 33, and a circulation throttle 34. External air, after passing through the throttle 32, is heated in the first degree heater 7 with heat of liquid heat-carrier from a divider 25. On supply pipes 28 and on return pipes 26 located in wellbores K1, K2, K3 perforated heads 30 are mounted. The perforated heads 30 have transverse pipes 35 mounted inside their supply pipes 28. The transverse pipes 35 are arranged in an alternate manner, and their axes are make an angle of 45°, giving swirling flow of water and increasing the surface of heat exchange via the perforations.
The transverse pipes 35, through which groundwater flows, are made of acid steel having increased heat- transfer coefficient and increased cooling-transfer coefficient. The ground-heat exchangers are immersed in groundwater in wellbores K1, K2, K3, having a depth of 30 m and a diameter of 200 mm. The parts of the heat exchangers immersed in groundwater, about 22 m long, are made of acid resistant steel tubes, while the rest of the arrangement, the supply pipes 28 and the return pipes 26 are made of polyethylene having high density HDPE.
Between the divider 25 and the first degree heater 7, on the pipeline supplying warm medium, successively in the flow are mounted: a cut-off valve 20, a strainer 21, an expansion vessel 18, a safety valve 19, a cut-off valve 16, and a three-way control valve 17 for regulation of temperature and flow, depending on the external air temperature. The cut-off valves 20 and manometers 22, indicating the degree of cleanness, are situated on both sides of the strainer 21. On the return pipe 26 which discharges cooled carrier from the first degree heater 7 are installed in succession: a balancing valve 15, a circulation pump 23, a check valve 24 and the cut-off valve 20. The heat carrier in the arrangement is 35% water solution of glycol.
In order to eliminate the effects of heat on the wellbores K1, K2, K3 they are spaced in the distance not less than 3m from one another. By reducing the depth of the wellbores K1, K2, K3 and the cascade connection of the ground - heat exchangers on a relatively small area increase the surface of heat exchange and the amount of obtained heat of the earth. Measurements of temperature changes of the heat carrier made in a prototype arrangement according to the invention carried out in winter at air temperature -15° C showed the following results:
- in the return pipe 26 at the outlet from the first degree heater 7 temperature of the water solution of glycol was + 4° C,
- on the outlets of the cascade connected ground- heat exchangers: wellbore K1 - temperature +7° C, wellbore K2 - temperature + 9° C, wellbore K3 - temperature +12° C, and consequently:
- outside air temperature behind the first degree heater 7 was -2° C, then raised in the second degree heater to a temperature of 20° C of the air supplied to the building.

### List of indications

1. Air conditioning unit
2. Rotary heat exchanger
3. Uptake ventilator
4. Intake ventilator
5. Uptake filter
6. Intake filter
7. First degree heater
8. Second degree heater
9. Cooling condenser
10. Fresh air intake ventilator
11.Aerator
12.Exhaust terminal
13.Ventilating hood
14.Air-escape
15.Balancing valve
16.Cut-off valve
17.Three-way valve
18.Expansion vessel
19.Safety valve
20.Cut-off valve
21.Strainer
22. Manometers
23.Circulation pump
24.Check valve
25. Distributor
26. Return pipe
27.Ventilator pipeline tube
28.Supply pipe
29.Acid steel tube
30. Perforated head
31. Drain valve
32.Intake ventilator throttle
33. Exhaust terminal throttle
34.Circulation throttle
35.Transverse pipe
K1 wellbore No.1
K2 wellbore No.2
K3 wellbore No.3

## Claims

1. Arrangement for obtaining heat from groundwater for air-condition and ventilation purposes, which comprises a unit of countercurrent ground-heat exchangers immersed in groundwater in wellbores, additionally, the ground-heat exchangers are connected to a first degree heater situated in an air-conditioning unit by means of the installation of supply pipes and return pipes working in a closed circuit, moreover, on the supply pipe which supplies the heater with warm water, there are installed in sequence in the flow: a cut-off valve, a strainer, a cut-off valve and a three-way control valve, while on the return pipe which drains cold water out of the heater, there are installed in sequence: a balance valve, a circulation pump, a check valve and a cut-off valve, **characterized in that** on the supply pipes (28) and on return pipes (26) positioned inside wellbores (K1, K2, K3) perforated heads (30) are connected and said perforated heads (30) have inside their supply pipes (28) transverse pipes (35) through which groundwater flows, in an alternating arrangement, and
said transverse pipes (35) are arranged in alternate manner and their axes make an angle of 45°, which gives swirling flow of water and increases the surface of heat exchange via the perforation.

2. Arrangement according to claim 1, **characterized in that** the transverse pipes (35) are made of acid resistant steel having increased heat- transfer coefficient and increased cooling-transfer coefficient.

## Patentansprüche

1. Das Gerätesystem zur Entnahme von heißem Wasser aus Grundwasseranlagen für Lüftungs- und Klimaanlagen, das eine Reihe von in einer Kaskadenschaltung reihenweise geschalteten Gegenstromwärmetauschern, den in Grundwasser eingetauchten Tiefbohrungen und der Zu- und Abluftventilation - angeschlossen mit dem Anwärmer der 1. Stufe mit einem geschlossenen Stromkreis durch eine Zufuhr- und Rückführleitung - aufweist, wobei an der Zufuhrleitung, die heißes Wasser an den Anwärmer bringt, nacheinander in der Strömung montiert werden: Absperrventil, Seiher, Absperrventil und Dreiwegesteuerventil und an der Rücklaufleitung, mit der das Kühlwasser aus dem Anwärmer abgeführt wird, nacheinander montiert werden: Ausgleichsventil, Zirkulationspumpe, Rückschlagventil und Absperrventil, **dadurch gekennzeichnet, dass** an den Speiseleitungen Rohr (28) und an der Rücklaufleitung Rohr (26), die in Bohrungen (K1, K2, K3) angebracht werden, perforierte Köpfe angeschlossen sind (30) die in der Leitung (28) befestigte Querrohre (35) aufweisen, durch die das Grundwasser in einem alternierenden System durchfließt, deren Achsen in einem Winkel von 45° zueinander gesetzt werden, die für eine wirbelnde Wasserströmung sorgen und die Wärmeaustauschfläche durch Perforationen erhöhen.

2. Das Gerätesystem nach Anspruch 1, **dadurch gekennzeichnet, dass** die Querrohre (35) aus säurebeständigem Stahl mit einem erhöhten Wärme- und Kälteübertragungskoeffizient bestehen.

## Revendications

1. Le système des dispositifs pour l'obtention de l'eau chaude depuis les installations de l'eau souterrain pour les appareils de ventilation et de climatisation qui comprend un groupe des échangeurs de chaleur à contre-courant connectés en séries dans la disposition en cascade, plongés dans l'eau souterrain des forages et connectés avec le dispositif de chauffage du I degré du groupe de ventilation à l'insufflation - extraction, par le circuit fermé par le ture d'alimentation et le tube de retour, où sur le tube d'alimentation amenant l'eau chaude au dispositif de chauffage sont installés consécutivement : vanne d'arrêt, filtre à filet, vanne d'arrêt et vanne de réglage à trois vois, et sur le tube de retour qui évacue l'eau refroidie depuis le dispositif de chauffage, sont installés consécutivement: vanne d'équilibrage, pompe de circulation, vanne de retour et vanne d'arrête, **caractérisé en ce que** aux conduits d'alimentation du tube (28) et au conduit de retour du tube (26) placés dans les forages (K1, K2, K3) sont connectés les tètes perforées (30) pourvus dans le tube (28) des tubulures transversales (35), par lesquels passe l'eau souterrain, en un agencement alterné, dont les axes sont disposés par rapport à l'autre selon un angle de 45°, ce qui donne l'écoulement tourbillonnaire de l'eau et en augmentant la surface d'échange de chaleur à travers les perforations.

2. L'agencement de dispositifs selon la revendication 1, **caractérisé en ce que** les tubes transversaux (35) sont en acier résistant aux acides avec un coefficient accru de pénétration de chaleur et de froid.
